# EUROPEAN PATENT SPECIFICATION

(11) **EP 3 908 439 B1**
(45) Date of publication and mention of the grant of the patent: **23.07.2025**
(21) Application number: 20738254.0
(22) Date of filing: 09.01.2020
(51) Int. Cl.: B29C 45/14, B29C 70/44, B29C 70/48, B29C 69/02

(54) **CARBON FIBER SHELL HAVING ELASTOMER INNER OVERMOLD, AND METHOD TO FABRICATE A CARBON FIBER SHELL HAVING ELASTOMER INNER OVERMOLD**
KOHLENSTOFFFASERSCHALE MIT ELASTOMERER INNERER UMSPRITZUNG UND VERFAHREN ZUR HERSTELLUNG EINER KOHLENSTOFFFASERSCHALE MIT ELASTOMERER INNERER UMSPRITZUNG
COQUE DE FIBRES DE CARBONE AYANT UN SURMOULE INTÉRIEUR EN ÉLASTOMÈRE, ET PROCÉDÉ DE FABRICATION D'UNE COQUE DE FIBRES DE CARBONE AYANT UN SURMOULE INTÉRIEUR EN ÉLASTOMÈRE

(30) Priority: 11.01.2019 US 201962791376 P
(43) Date of publication of application: 17.11.2021
(73) Proprietor: Air Design, S.A. de C.V., Tlalnepantla, 54080 (MX)
(72) Inventor: AVALOS SARTORIO, Carlos Jose, Morelos, 62767 (MX); AVALOS SARTORIO, Miguel Jose, Morelos, 62767 (MX)
(74) Representative: IP Sextant s.r.l.
(86) International application number: PCT/IB2020/050158
(87) International publication number: WO 2020/144625

(56) References cited:
- EP-A1- 3 398 748
- WO-A1-2017/062809
- US-A- 3 261 153
- US-A- 384 188
- US-A- 4 145 866
- US-A1- 2003 041 583
- US-A1- 2004 185 733
- US-A1- 2005 236 736
- US-A1- 2009 047 854
- US-A1- 2014 076 591
- US-A1- 2014 173 948
- US-A1- 2016 073 581
- US-A2- 2017 246 782
- US-B1- 9 353 500
- US-B2- 7 934 365
- US-B2- 8 216 501
- MIRACLE D B ET AL: "Curing", 1 January 2001, ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 486 - 491, ISBN: 978-0-87170-703-1, XP002563889
- RUDD C D ED - MIRACLE & S L DONALDSON D B: "Resin transfer molding and structural reaction injection molding", 1 December 2001, ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 492 - 500, ISBN: 978-0-87170-703-1, XP002676513
- CAMPBELL F C ED - CAMPBELL FLAKE C: "Manufacturing processes for advanced composites, Chapter 12 (Assembly: The Best Assembly Is No Assembly Required", 1 January 2004, MANUFACTURING PROCESSES FOR ADVANCED COMPOSITES, ELSEVIER ADVANCED TECHNOLOGY, OXFORD, GB, PAGE(S) 435 - 464, 469, ISBN: 978-1-85617-415-2, XP002613994

## Description

### BACKGROUND

The present disclosure is related to composite shells and the manufacture thereof, including carbon-fiber shells having an elastomer inner overmold.

<Document XP2563889A discloses a curing method and the relative instruments to perform it.

Document XP2676513A discloses resin transfer molding and structural reaction injection molding techniques.

EP3398748A1, WO2017062809A1 and US20090047854A1 teach methods for manufacturing a composite molded body starting from a carbon fiber composite sheet material.

Document XP2613994A teaches trimming and machining operations of composite materials.

US 2017/0246782A2 teaches a method for molding a composite sheet in an injection molding press comprising.

US 2005/0236736A1 discloses a method for manufacturing an automotive vehicle panel by staking a plurality of sheet of fiber prepreg alternate to respective sheets of fibrous veil and forming the layered material by compression molding.

US2004/0185733A1 discloses a carbon fiber composite board to be used in automobile components and the method for its manufacturing.

US 8216501B2 discloses a method for producing molded parts with a ductile insert inside them.>

### BRIEF DESCRIPTION OF THE DRAWINGS/FIGURES

The accompanying drawings, which are incorporated herein and form a part of the specification, illustrate the embodiments of the present disclosure and, together with the description, further serve to explain the principles of the embodiments and to enable a person skilled in the pertinent art to make and use the embodiments.
Figures 1A-1F illustrate a method of manufacturing a carbon fiber shell having elastomer inner overmold according to an exemplary embodiment of the disclosure.
Figure 2A illustrates a carbon fiber shell according to an exemplary embodiment of the disclosure.
Figure 2B illustrates a carbon fiber shell with an overmolded interior according to an exemplary embodiment of the disclosure.
Figure 2C illustrates an overmolded carbon fiber shell following trimming according to an exemplary embodiment of the disclosure.
Figure 2D illustrates an overmolded carbon fiber shell following a clearcoat application according to an exemplary embodiment of the disclosure.
Figure 3 illustrates a flowchart of a method of manufacturing a carbon fiber shell having elastomer inner overmold according to an exemplary embodiment of the disclosure.

The exemplary embodiments of the present disclosure will be described with reference to the accompanying drawings. In the drawings, the same or similar reference signs are used for identical or similar components.

### DETAILED DESCRIPTION

In the following description, numerous specific details are set forth in order to provide a thorough understanding of the embodiments of the present disclosure. However, it will be apparent to those skilled in the art that the embodiments, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring embodiments of the disclosure.

An object of the present disclosure is to provide a process to fabricate/manufacture a composite shell material. In an exemplary embodiment, the composite shell is applicable for automotive vehicles, motorcycles, boats, aircraft, trains, or other transportation devices. The present disclosure is not limited to transportation-related applications and the composite shell can be used in other aspects as would be understood by one of ordinary skill in the relevant arts.

In an exemplary embodiment, the composite shell is a carbon fiber shell having an inner overmolded elastomeric body. Advantageously, the composite shell of one or more embodiments combines the properties (e.g. look, feel, and/or structural properties) of carbon fiber with the properties and benefits of a controlled shape of the inner face of the composite shell to facilitate the fixing of the composite shell onto other surfaces.

In an exemplary embodiment, the composite shell can be applied to a wide variety of parts/areas of, for example, a vehicle and/or aircraft. In an exemplary embodiment, the composite shell is applied to non-structural parts/areas of, for example, a vehicle, motorcycles, aircraft, and/or other vessels, crafts, or structures. In an exemplary embodiment, the composite shell is used for the manufacturing of spoilers for vehicles. The disclosure is not limited to spoiler applications, and can be used in other vehicle, aircraft, and/or maritime vessels (e.g. boats) components. In exemplary embodiments, the composite shell can form external and/or interior portions of the vehicle/aircraft/vessel. These portions can include external and/or internal accessories, but are not limited thereto.

Advantageously, the composite shell according to exemplary embodiments provides high superficial strength (e.g. carbon fiber surface) on the outer surface combined with increased flexibility on the inner (e.g. overmolded elastomer) surface, which facilitates assembly of the shell onto another surface or component/part. These advantages are not realized with conventional carbon fiber parts. In an exemplary embodiment, the carbon fiber shell has a thickness of 0.5 to 1 mm, but is not limited thereto.

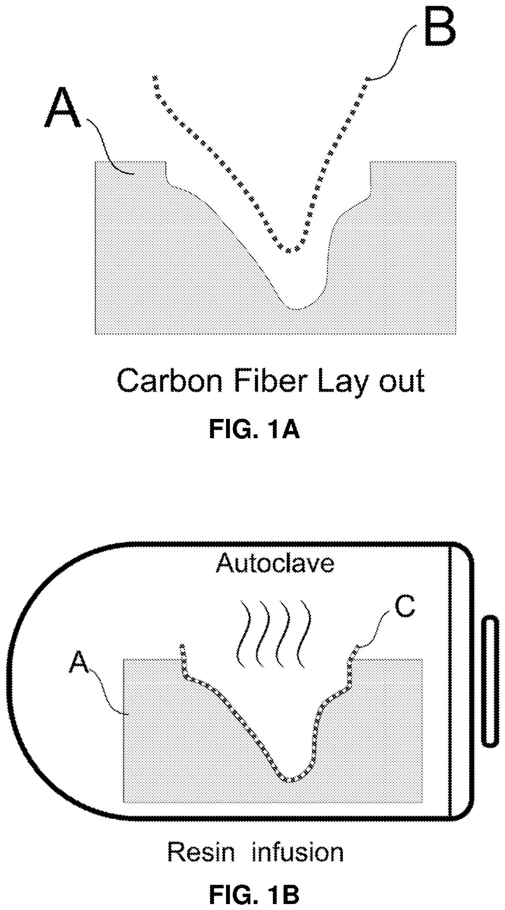

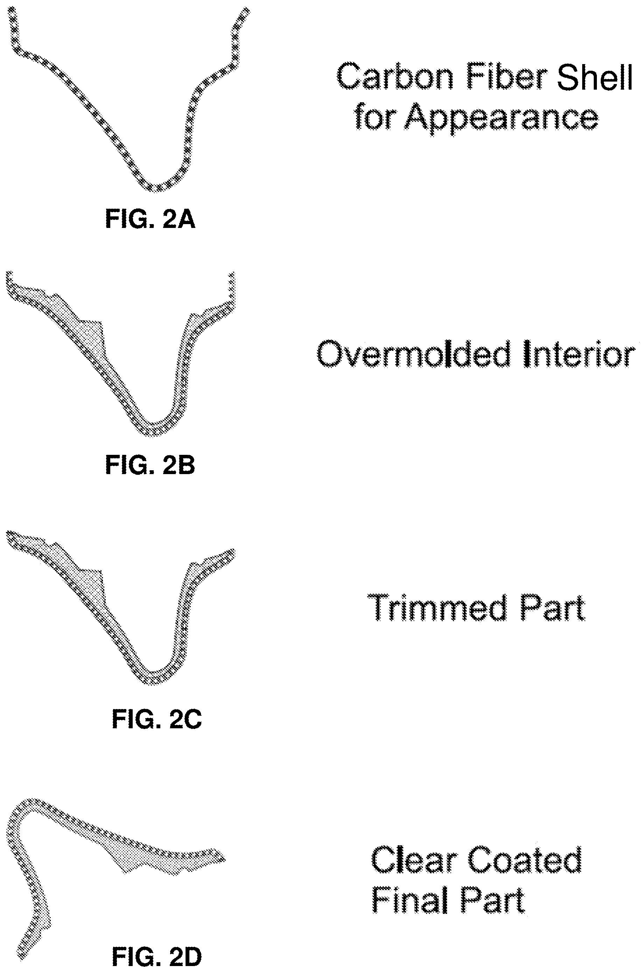

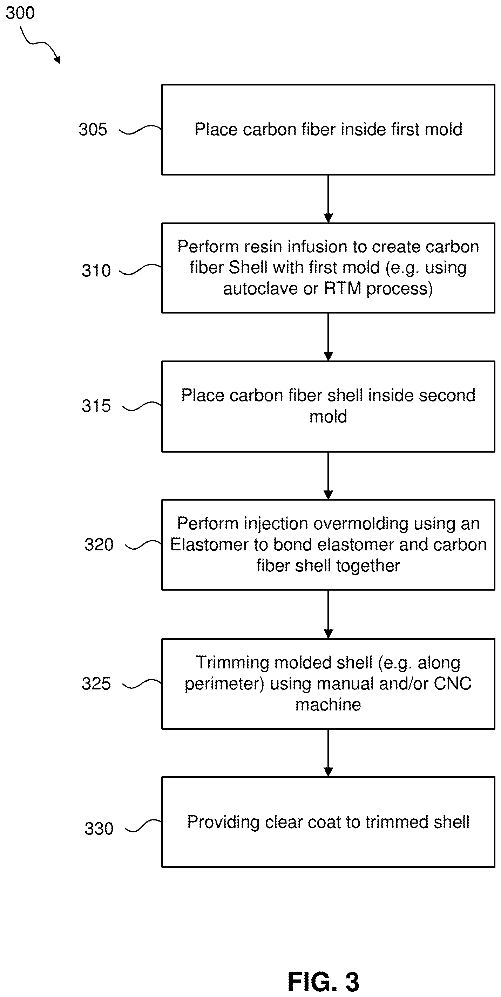

With reference to FIGS. 1A-1F and the flowchart shown in FIG. 3, a method to fabricate a composite carbon fiber and elastomer shell according to exemplary embodiments is described. FIG. 2 shows the examples of the composite shell during various operations of the fabrication method according to an exemplary embodiment.

At operation 305, and as shown in FIG. 1A, carbon fiber (B) is placed in a mold (A) (e.g. single-sided mold).

After operation 305, and as shown in FIG. 1B, the flowchart 300 transitions to operation 310, where a resin infusion operation is performed to create a carbon fiber shell (C) using the mold (A). In an exemplary embodiment, the resin fusion operation using an autoclave in which the carbon fiber mold are placed in a chamber configured to generate an elevated pressure (e.g. 7 bar) and/or temperature (e.g. 120 - 230 degrees Celsius) therein to infuse the resin with the carbon fiber. In another embodiment, the resin infusion is achieved using a resin transfer molding (RTM) process that includes, a closed mold that is sealed, heated, and placed under vacuum. In an exemplary aspect, the resin infusion operation is performed for 1-3 hours, but is not to this example duration.

An example of the carbon fiber used as the yarn is HexForce Carbon Fabric x2x Twill 193GSM, but is not limited thereto. An example of the resin infused with the carbon fiber is PRO-SET Infusion Epoxy (INF-114, INF-211), but is not limited thereto.

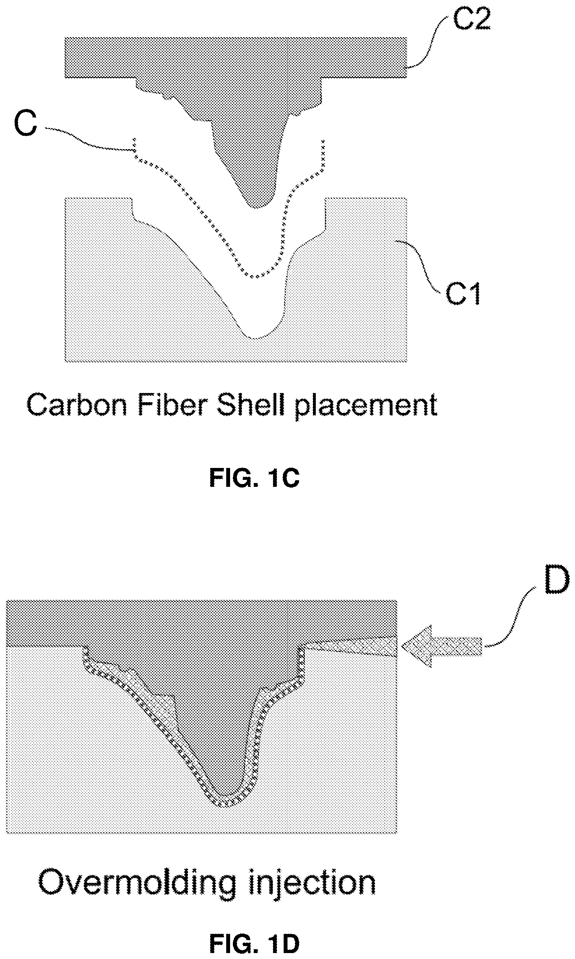

After operation 310 and as shown in FIG. 1C, the flowchart 300 transitions to operation 315, where the carbon fiber shell (C) resulting from the resin infusion operation is placed in a mold, such as a multi-part mold (C1 and C2). The mold C1 can be the same or different from mold A. The multi-part mold can include two mold parts (e.g. C1 and C2), but is not limited thereto.

After operation 315 and as shown in FIG. 1D, the flowchart 300 transitions to operation 320, where the multi-part mold (C1 and C2) is closed with the carbon fiber shell (C) housed therein. At operation 320, the elastomer (D) is molded onto the carbon fiber shell (C) to generate a composite shell D1. In an exemplary aspect, an injection molding operation is performed to mold the elastomer (D) onto the carbon fiber shell (C). This injection molding operation (injection overmolding) bonds the elastomer and carbon fiber shell together. In an exemplary embodiment, the elastomer is, for example, RIMLINE SH87930-RUBINATE 8600, but is not limited thereto.

In an exemplary embodiment, the elastomer is provided at a temperature of, for example, 20 to 30°C, and/or the mold has a temperature of, for example, 35 to 40 °C. The disclosure is not limited to these exemplary temperatures. In an exemplary embodiment, the elastomer is injection molded at a pressure of, for example, 190 bar, but is not limited thereto. The injection molding operation can be performed for 5-10 minutes, but is not limited thereto.

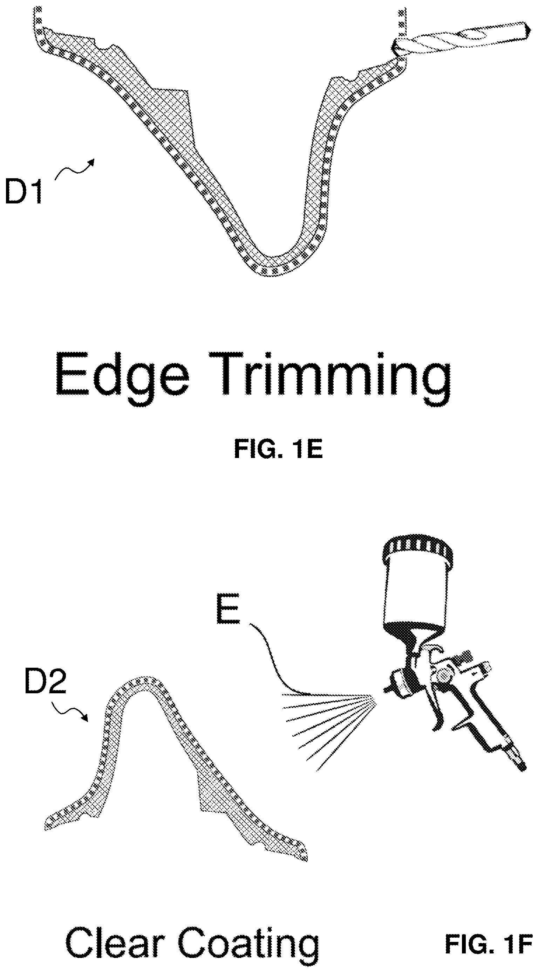

After operation 320 and as shown in FIG. 1E, the flowchart 300 transitions to operation 325, where the composite shell (D1) is removed from the injection mold and trimmed to provide a trimmed composite shell (D2). In an exemplary embodiment, the perimeter of the composite shell (D1), such as portions of the composite shell (D1) without elastomer bonded thereto are trimmed to remove these portions from the composite shell (D1). In an exemplary embodiment, the trimming operations can be a manual trimming using, for example, one or more cutting or grinding tools, and/or be performed using, for example, a computer numerical control (CNC) cutting device.

After operation 325 and as shown in FIG. 1F, the flowchart 300 transitions to operation 330, where the trimmed composite shell (D2) is coated with one or more materials that can provide increased durability for the composite shell. For example, the coating material can provide increased abrasive resistance, UV light blocking, chemical resistance, or the like. The coating material can be a clearcoat material. The clearcoat material can be, for example, transparent.

The clearcoat can be glossy or matte. The coating material can be applied using a spray system in an exemplary embodiment, but is not limited thereto.

### Conclusion

The aforementioned description of the specific embodiments will so fully reveal the general nature of the disclosure that others can, by applying knowledge within the skill of the art, readily modify and/or adapt for various applications such specific embodiments, without undue experimentation, and without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

References in the specification to "one embodiment," "an embodiment," "an exemplary embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The exemplary embodiments described herein are provided for illustrative purposes, and are not limiting. Other exemplary embodiments are possible, and modifications may be made to the exemplary embodiments. Therefore, the specification is not meant to limit the disclosure. Rather, the scope of the disclosure is defined only in accordance with the following claims and their equivalents.

### Reference List

- A: Mold for resin transfer
- B: Carbon Fiber
- C: Carbon Fiber Shell
- C1: Mold for Injection Female Side
- C2: Mold for Injection Male Side
- D: Elastomer
- D1: Composite shell (untrimmed)
- D2: Composite shell (trimmed)
- E: Clearcoat

## Claims

1. A method of manufacturing a composite shell, comprising:
infusing carbon fiber with a resin using a first mold to create a carbon fiber shell;
injection molding a molding material onto the carbon fiber shell using a second mold to generate a molded shell, wherein said molding material is an elastomer and said injection molding of said molding material is performed to provide said carbon fiber shell with an inner overmolded elastomeric body;
trimming the molded shell to create a trimmed shell; and
clear coating the trimmed shell to create the composite shell.

2. The method according to claim 1, wherein the first mold is a single-sided mold.

3. The method according to claim 1, wherein the second mold is different from the first mold, optionally wherein the second mold is a multi-part mold having at least two mold parts.

4. The method according to claim 1, wherein infusing the carbon fiver with the resin comprises subjecting the carbon fiber and the resin to an elevated temperature with respect to an ambient temperature and/or an elevated pressure with respect to an ambient pressure.

5. The method according to claim 1, wherein the resin is infused with the carbon fiber using an autoclave or wherein the resin is infused with the carbon fiber using a resin transfer molding (RTM) process.

6. The method according to claim 4, wherein the elevated temperature is 120 - 230 degrees Celsius and the elevated pressure is at least 7 bar.

7. The method according to claim 1, wherein the resin infused with the carbon fiber is an epoxy.

8. The method according to claim 1, wherein the injection molding is performed at a temperature of 35 to 40°, the molding material is provided at a temperature of 20 to 30°C, and/or the molding material is injection molded at a pressure of 190 bar.

9. The method according to claim 1, wherein the trimming removes portions of the molded shell that include only the carbon fiber shell.

10. The method according to claim 1, wherein the trimming removes portions of the molded shell along the perimeter.

11. The method according to claim 1, wherein the clear coating at least partially blocks ultraviolet light and/or provides an increased chemical resistance.

12. The method according to claim 1, wherein the composite shell is a carbon fiber shell having an elastomer inner overmold.

## Patentansprüche

1. Verfahren zur Herstellung einer Verbundstoffhülle, das Folgendes umfasst:
Infundieren von Kohlenstofffaser mit einem Harz unter Verwendung einer ersten Form, um eine Kohlenstofffaserhülle zu erzeugen;
Spritzgießen eines Formmaterials auf die Kohlenstofffaserhülle unter Verwendung einer zweiten Form, um eine geformte Hülle zu erzeugen, wobei das Formmaterial ein Elastomer ist und das Spritzgießen des Formmaterials durchgeführt wird, um die Kohlenstofffaserhülle mit einem inneren überformten elastomeren Körper zu versehen;
Beschneiden der geformten Hülle, um eine beschnittene Hülle zu erzeugen; und
Klarbeschichten der beschnittenen Hülle, um die Verbundstoffhülle zu erzeugen.

2. Verfahren nach Anspruch 1, wobei die erste Form eine einseitige Form ist.

3. Verfahren nach Anspruch 1, wobei sich die zweite Form von der ersten Form unterscheidet, wobei die zweite Form optional eine mehrteilige Form mit mindestens zwei Formteilen ist.

4. Verfahren nach Anspruch 1, wobei das Infundieren der Kohlenstofffaser mit dem Harz das Aussetzen der Kohlenstofffaser und des Harzes einer erhöhten Temperatur in Bezug auf eine Umgebungstemperatur und/oder einem erhöhten Druck in Bezug auf einen Umgebungsdruck umfasst.

5. Verfahren nach Anspruch 1, wobei das Harz mit der Kohlenstofffaser unter Verwendung eines Autoklaven infundiert wird oder wobei das Harz mit der Kohlenstofffaser unter Verwendung eines Harztransferformverfahrens (RTM-Verfahrens) infundiert wird.

6. Verfahren nach Anspruch 4, wobei die erhöhte Temperatur 120 - 230 Grad Celsius beträgt und der erhöhte Druck mindestens 7 bar beträgt.

7. Verfahren nach Anspruch 1, wobei das mit der Kohlenstofffaser infundierte Harz ein Epoxid ist.

8. Verfahren nach Anspruch 1, wobei das Spritzgießen bei einer Temperatur von 35 bis 40 °C durchgeführt wird, das Formmaterial bei einer Temperatur von 20 bis 30 °C bereitgestellt wird und/oder das Formmaterial bei einem Druck von 190 bar spritzgegossen wird.

9. Verfahren nach Anspruch 1, wobei das Beschneiden Abschnitte der geformten Hülle entfernt, die nur die Kohlenstofffaserhülle beinhalten.

10. Verfahren nach Anspruch 1, wobei das Beschneiden Abschnitte der geformten Hülle entlang des Umfangs entfernt.

11. Verfahren nach Anspruch 1, wobei die Klarbeschichtung zumindest teilweise ultraviolettes Licht blockiert und/oder eine erhöhte chemische Beständigkeit bereitstellt.

12. Verfahren nach Anspruch 1, wobei die Verbundstoffhülle eine Kohlenstofffaserhülle mit einer inneren elastomerischen Überformung ist.

## Revendications

1. Procédé de fabrication d'une coque composite, comprenant :
l'infusion de fibre de carbone avec une résine en utilisant un premier moule pour créer une coque en fibre de carbone ;
le moulage par injection d'un matériau de moulage sur la coque en fibre de carbone en utilisant un second moule pour générer une coque moulée, où ledit matériau de moulage est un élastomère et ledit moulage par injection dudit matériau de moulage est réalisé pour fournir à ladite coque en fibre de carbone un corps élastomère surmoulé interne ;
le détourage de la coque moulée pour créer une coque détourée ; et
l'application d'un revêtement transparent sur la coque détourée pour créer la coque composite.

2. Procédé selon la revendication 1, dans lequel le premier moule est un moule à simple face.

3. Procédé selon la revendication 1, dans lequel le second moule est différent du premier moule, facultativement dans lequel le second moule est un moule à plusieurs parties ayant au moins deux parties de moule.

4. Procédé selon la revendication 1, dans lequel l'infusion de la fibre de carbone avec la résine comprend la soumission de la fibre de carbone et de la résine à une température élevée par rapport à la température ambiante et/ou à une pression élevée par rapport à la pression ambiante.

5. Procédé selon la revendication 1, dans lequel la résine est infusée avec la fibre de carbone en utilisant un autoclave ou dans lequel la résine est infusée avec la fibre de carbone en utilisant un procédé de moulage par transfert de résine (RTM).

6. Procédé selon la revendication 4, dans lequel la température élevée est comprise entre 120 et 230 degrés Celsius et la pression élevée est d'au moins 7 bars.

7. Procédé selon la revendication 1, dans lequel la résine infusée avec la fibre de carbone est un époxy.

8. Procédé selon la revendication 1, dans lequel le moulage par injection est réalisé à une température allant de 35 à 40°C, le matériau de moulage est fourni à une température allant de 20 à 30°C, et/ou le matériau de moulage est moulé par injection à une pression de 190 bars.

9. Procédé selon la revendication 1, dans lequel le détourage permet de retirer des parties de la coque moulée qui ne comprennent que la coque en fibre de carbone.

10. Procédé selon la revendication 1, dans lequel le détourage permet de retirer des parties de la coque moulée le long du périmètre.

11. Procédé selon la revendication 1, dans lequel l'application d'un revêtement transparent permet de bloquer au moins partiellement la lumière ultraviolette et/ou de fournir une résistance chimique accrue.

12. Procédé selon la revendication 1, dans lequel la coque composite est une coque en fibre de carbone ayant un surmoulage interne élastomère.
